# EUROPÄISCHE PATENTSCHRIFT

(11) **EP 0 522 340 B1**
(45) Veröffentlichungstag und Bekanntmachung des Hinweises auf die Patenterteilung: **24.01.1996**
(21) Anmeldenummer: 92110470.9
(22) Anmeldetag: 22.06.1992
(51) Int. Cl.: C08G 18/08, C08G 18/28, C08G 18/40, C08K 5/51

(54) **Verfahren zur Herstellung thermoplastischer Polyurethan-Elastomere**
Process for the preparation of thermoplastic polyurethane elastomers
Procédé de préparation d'élastomères thermoplastiques de polyuréthanes

(30) Priorität: 02.07.1991 DE 4121785
(43) Veröffentlichungstag der Anmeldung: 13.01.1993
(73) Patentinhaber: BAYER AG, D-51368 Leverkusen (DE)
(72) Erfinder: Bräuer, Wolfgang, Dr., W-5090 Leverkusen 1 (DE); Müller, Friedemann, Dr., W-4040 Neuss (DE); Ott, Karl-Heinz, Dr., W-5090 Leverkusen 1 (DE)

(56) Entgegenhaltungen:
- EP-A- 0 292 786
- GB-A- 974 308
- US-A- 3 794 592
- US-A- 4 169 196
- US-A- 4 361 692

## Beschreibung

Die Erfindung betrifft ein Verfahren zur standardisierten Herstellung thermoplastischer Polyurethan-Elastomere durch die Desaktivierung reaktiver Metallspuren durch Phosphorverbindungen.

Thermoplastische Polyurethan-Elastomere (TPU) sind seit langem bekannt. Sie sind von technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten läßt sich eine große Variationsbreite mechanischer Eigenschaften erzielen. Eine Übersicht über TPU, ihren Eigenschaften und Anwendungen wird z.B. in Kunststoffe 68 (1978), Seiten 819 bis 825 oder Kautschuk, Gummmi, Kunststoffe 35 (1982), Seiten 568 bis 584 gegeben.

TPU werden aus linearen Polyhydroxyverbindungen, meist Polyester oder Polyether, organischen Diisocyanaten und kurzkettigen Diolen aufgebaut.

Sie können kontinuierlich oder diskontinuierlich hergestellt werden. Als die bekanntesten Herstellverfahren werden das sogenannte Bandverfahren und das Extruderverfahren auch technisch genutzt.

In der Praxis ist die Herstellung von TPU jedoch erschwert durch einen nicht konstanten Gehalt an Metallspuren in den Rohstoffen, vor allem in den linearen Polyhydroxyverbindungen. Diese Metallspuren kommen entweder aus der Herstellanlage oder werden als Katalysator zur Herstellung der Polyhydroxyverbindungen zugesetzt. Es können beispielsweise organische oder anorganische Eisen-, Kupfer-, Titan-, Zinn-, Antimon- oder Bleiverbindungen sein. Sie unterliegen oft einer Zerfallskinetik, die zu einem zeitlich sich verändernden Gehalt in den Rohstoffen führt. Diese Metallspuren im ppm-Bereich können unerwünschte Nebenreaktionen und/oder aufgrund ihres Einflusses auf TPU-Reaktionen unkontrollierte Temperaturerhöhungen bei der TPU-Herstellung, die zu Schwankungen in den Produkteigenschaften führen, bewirken.

Aus diesen Gründen ist es vorteilhaft, die Metallspuren vor oder während der TPU-Herstellung zu desaktivieren, so daß mit einer konstant niedrigeren Reaktivität der Rohstoffe ein kontrollierter linearer TPU-Aufbau gewährleistet ist.

Als Desaktivatoren für Metallspuren in den Rohstoffen für die Polyurethan-Reaktionen sind schon einige Verbindungen bekannt. Dies sind vor allem Komplexbildner wie die β-Diketone (DD 155 620) und N-Heterocyclen (DD 195 136), Säuren wie z.B. Phosphorsäure (US 3 794 592) Phosphate (US 4361 692) und Oxidationsmittel wie z.B. H₂O₂ (DD 148 883).

Die Nachteile dieser vor allem bei vernetzten Polyurethansystemen eingesetzten Verbindungen liegen zum einen in ihrer eingeschränkten Wirksamkeit bei den speziellen TPU-Rohstoffen und Herstellbedingungen, zum anderen in ihren Wirkungen auf die Eigenschaften des fertigen thermoplastisch verarbeitbaren Polyurethans (Verfärbung durch Oxidation und/oder Hydrolyse).

Die in US 4 169 196 und GB 974 308 genannten Phosphite dienen nicht als Desaktivatoren.

Es bestand daher weiterhin die Aufgabe, auf einfache, wirksame und die TPU-Eigenschaften nicht störende Weise die Metallspuren in den Rohstoffen zu desaktivieren.

Gegenstand der Erfindung ist nun ein Verfahren zur standardisierten Herstellung von thermoplastischen Polyurethan-Elastomeren (TPU), dadurch gekennzeichnet, daß man den Rohstoffen, vorzugsweise den im wesentlichen linearen hydroxylterminierten Polyolen, vor oder während der TPU-Herstellung 0,000001 bis 0,3 bevorzugt 0,00001 bis 0,2 Gew.-%, besonders bevorzugt 0,0001 bis 0,1 Gew.-%, bezogen auf die Rohstoffe, ein oder mehrere Verbindungen des Phosphors der folgenden allgemeinen Formel (II) bis (IV) zusetzt.

Erfindungsgemäß können als Verbindungen des Phosphors Phosphite der allgemeinen Formeln (II) bis (IV) verwendet werden, in denen bedeuten:
- X: Wasserstoff, einen gegebenenfalls substituierten aliphatischen, cycloaliphatischen oder aromatischen Rest mit 1 bis 18 C-Atomen oder einen Alkaryl oder Aralkylrest mit 7 bis 24 C-Atomen, der auch olefinische Doppelbindungen und Heteroatome (bevorzugt O, S und nichtbasische Stickstoffe) enthalten kann,
- n: eine ganze Zahl von 1 bis 4, vorzugsweise 1 bis 2, entsprechend der Bindigkeit von X, 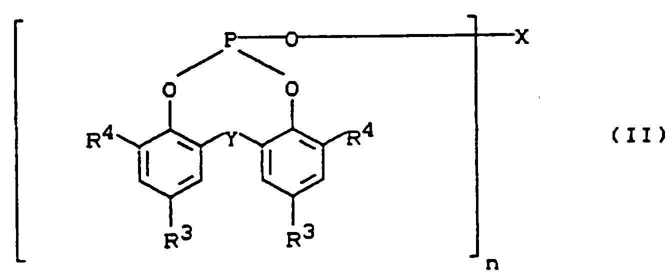
in der
- X und n: die oben angegebene Bedeutung haben,
- R³ und R⁴: gleiche oder verschiedene C₁₋₉ aliphatische C₅₋₆ cycloaliphatische und C₇₋₉-Aralkyl oder 6-10-Arylreste bedeuten,
- Y: für eine einfache Bindung, S oder HCR⁵ steht, wobei R⁵ = H, C₁₋₆-Alkyl-, Cyclohexenyl- oder Cyclohexyl.

Besonders bevorzugt sind Verbindungen der Formel (II), in denen
- X: Wasserstoff,
- R³: einen C₁_₉-Alkylrest, einen C₅_₆-Cycloalkylrest, einen C₇₋₉-Aralkylrest oder einen C₆₋₁₀ Arylrest bedeutet,
- R⁴: einen Benzyl-, α-Methylbenzyl-, α,α'-Dimethyl benzyl-, Methyl-, Ethyl-, Isopropyl-, tert.-Butyl-, tert.-Amyl-, Isononyl-, Cyclopentyl- oder Ccylo-hexylrest darstellt und
- Y: für S, CH₂, CH₃-CH, -CH₃CH₂CH, CH₃CH₂CH₂-CH, (CH₃)₂CH-CH, 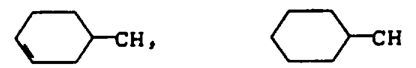
steht.

Diese Phosphite sind in EP 232 901 beschrieben.

Erfindungsgemäß einzusetzende Stabilisatoren sind ferner Verbindungen der Formeln III-IIIe gemäß DE-OS 2 034 887: 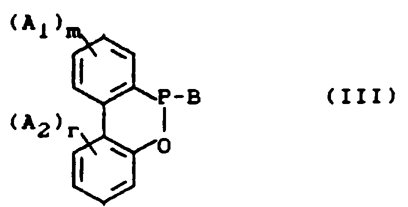 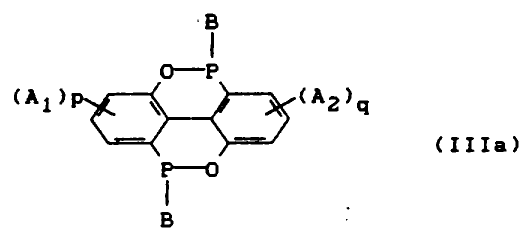 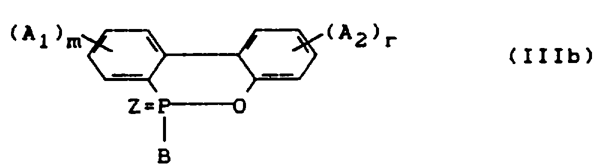 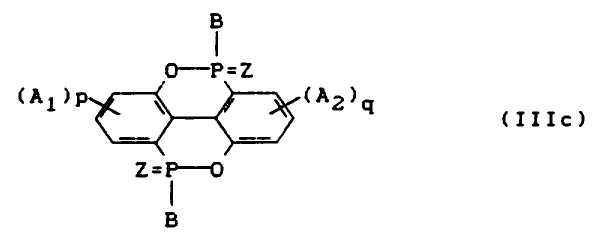 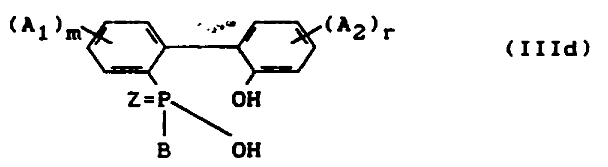 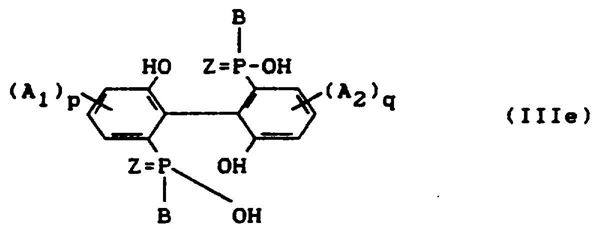 worin B Wasserstoff, Hydroxyl, Halogen, C₁-C₂₂-Alkyl, C₁-C₂₂-Alkoxy, C₁-C₂₂-Alkylthio, Aryloxy oder Arylthio, A₁ und A₂, die gleich oder verschieden sein können, Wasserstoff, Halogen, C₁-C₁₈-Alkyl, C₁-C₁₈-Alkyloxy, Aryl, Aryloxy, Acyl, Cyan, wobei die Reste A₁ und A₂ zusammen mit dem Biphenylring auch einen Phenanthrenring bilden können, Z Sauerstoff oder Schwefel, m und r ganze Zahlen von O bis 4 und p und q ganze Zahlen von O bis 3 bedeuten.

Die systematischen Bezeichnungen dieser Organophosphorverbindungen sind sehr kompliziert. Sie besitzen beispielsweise folgende Strukturformeln: 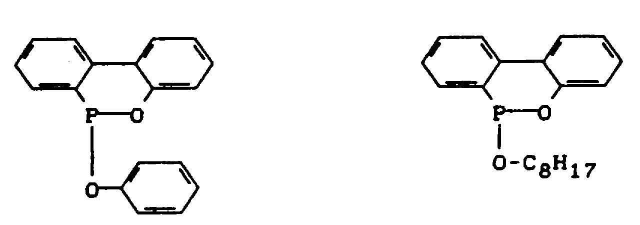 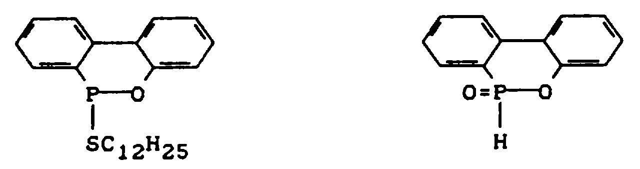 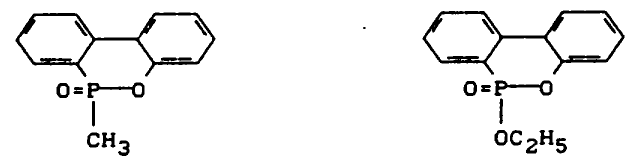 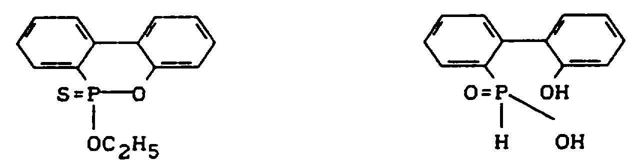 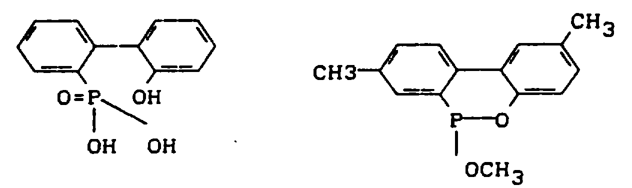 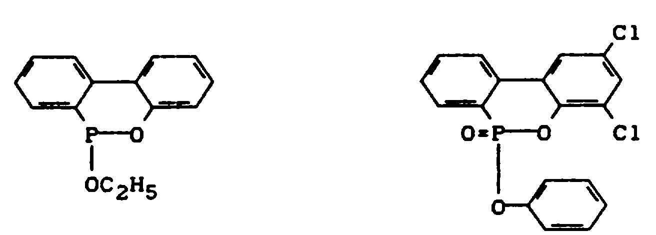 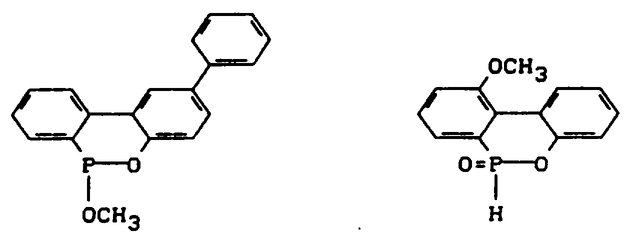 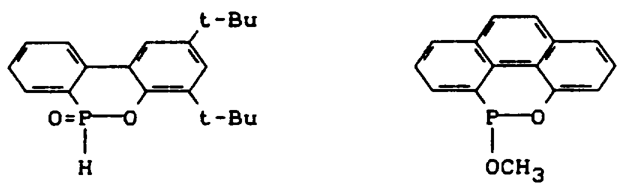 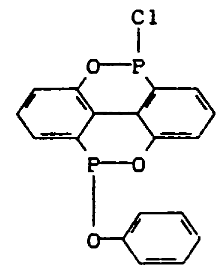 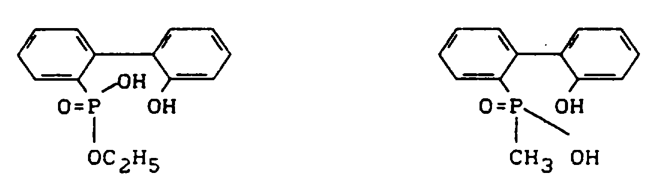 bevorzugt sind solche, in denen
B H, OH, C₁-C₁₈-Alkyl, C₁-C₁₈-Alkoxy, Aryloxy, Arylthio
A₁ und A₂ H, C₁-C₉-Alkyl, C₁-C₉-Alkoxy, Aryl, Aryloxy,
Z O
m und r 0, 1, 2
p und q 0, 1, 2
besonders bevorzugt
B H, OH,
A₁ und A₂ H,
Z O
m und r 0, 1
p und q 0.

Erfindungsgemäß einzusetzende Stabilisatoren sind ferner Phosphite der Formel (IV), die aus Pentaerythrit, Perhydrobisphenol A, Monoalkoholen und Phosphorigsäureester zugänglich sind. Sie werden hergestellt, indem man die Komponenten Trialkyl- oder Triphenylphosphit, Pentaerythrit, Perhydrobisphenol und gegebenenfalls einen Monoalkohol in den erforderlichen Molverhältnissen miteinander umestert und dabei den Alkohol aus dem Trialkylphosphit oder Phenol aus dem Triphenylphosphit durch Destillation, gegebenenfalls im Vakuum, bis zu einer Sumpftemperatur von maximal 200° aus dem Gleichgewicht entfernt.

Zweckmäßig setzt man zuerst Pentaerythrit mit dem Phosphit um unter Abdestillieren einer ersten Fraktion von etwa 2 Mol Hydroxyverbindung pro Mol Phosphit, dann gibt man Perhydrobisphenol A hinzu und destilliert während der Umsetzung weitere Hydroxyverbindung ab bis zu einer Sumpftemperatur von vorzugsweise 180°, besonders bevorzugt 170°.

Soll ein C₆-C₁₈-Monoalkohol mit verwendet werden, so wird dieser vorzugsweise zugegeben, nachdem die zweite Fraktion der Hydroxyverbindung abdestilliert wurde. Nach Zugabe dieses Monoalkohols wird eine dritte Fraktion der Hydroxyverbindung aus dem ursprünglich eingesetzten Phosphit destillativ bis zu einer Sumpftemperatur von vorzugsweise 180°, besonders bevorzugt 170°, gegebenenfalls im Vakuum entfernt.

Arbeiten im Vakuum ist besonders dann erforderlich, wenn mit Triphenylphosphit gearbeitet wird, oder wenn im Endstadium der Umesterung die letzten Reste eines niedrigen Alkohols aus dem Reaktionsgemisch entfernt werden sollen.

Die genannten Komponenten werden in folgenden Molverhältnissen miteinander umgesetzt :

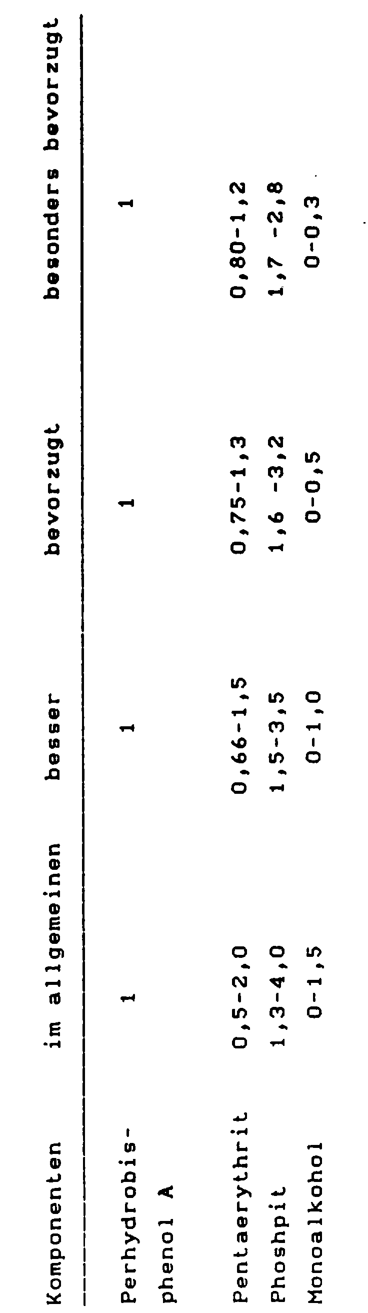

Geeignete Phosphite sind Triphenylphosphit, bevorzugt Trialkylphosphite aus C₁-C₄-Alkoholen, besonders bevorzugt Trimethyl- und Triethylphosphit.

Geeignete Monoalkohole sind aliphatische Alkohole mit 6-18 C-Atomen, besonders primäre Alkohole. Genannt seien beispielsweise Isooctanol, Decanol, Dodecanol, Tetradecanol und Octadecanol.

Naturgemäß entstehen bei dieser Synthese durch Umesterung keine einheitlichen Verbindungen, sondern Gemische von oligomeren Phosphiten, denen überwiegend die folgende Struktur IV zukommt: 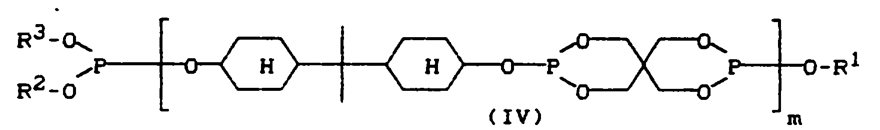 worin R¹, R und R³ gleich oder verschieden sein können und C₁-C₁₈-Alkyl, Aryl, einen Rest der Struktur V, 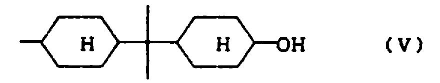 R¹ außerdem einen Rest der Struktur VI, 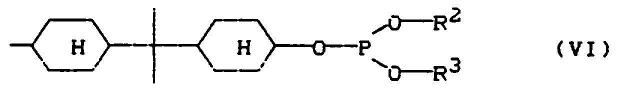 R und R³ außerdem zusammen einen Rest der Struktur VII darstellen und m 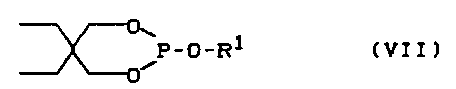 eine ganze Zahl von 1-20 bedeuten.

Bevorzugt stellen dar R¹, R und R³ Methyl, Ethyl, Propyl, Butyl, Isooctyl, Decyl, Dodecyl, Tetradecyl, Octadecyl, R¹ außerdem den Rest V und VI und R und R³ zusammen den Rest VII, m = 2-15. Besonders bevorzugt sind R¹, R und R³ Methyl, Ethyl, Octadecyl (Stearyl), R¹ außerdem Rest V und VI, R und R³ zusammen außerdem Rest VII, m = 2-10.

Ähnliche Stabilisatoren wie unter IV beschrieben sind in der US-PS 3 571 251 offenbart.

Auch diese Phosphite können im Sinne der vorliegenden Erfindung verwendet werden.

Besonders bevorzugte Phosphite sind jedoch solche der allgemeinen Formel (II).

Erfindungsgemäß verfährt man so, daß man die genannten Phosphorverbindungen den Rohstoffen zusetzt und die TPU-Herstellung mit den auf niedrigerer Reaktivität standardisierten Rohstoffen auf die bekannten Weisen durchführt, indem man
a) wenigstens ein im wesentlichen lineares hydroxylterminiertes Polyol, bevorzugt ein Poly-ester, -ether, -carbonat oder ein Gemisch aus diesen, vorzugsweise mit einem mittleren Molekulargewicht von 800 bis 5000, vorzugsweise 1000 bis 4000,
b) wenigstens ein Isocyanat der allgemeinen Formel OCN-Z-NCO, wobei Z ein zweiwertiges organisches Radikal ist,
c) gegebenenfalls wenigstens ein Diol-Kettenverlängerer, vorzugsweise ein aliphatisches Diol mit 2 bis 14 C-Atomen, bevorzugt Ethylenglykol, Butandiol, Hexandiol, 1,4-Di(b-hydroxyethyl)-hydrochinon
umsetzt, wobei das NCO/OH-Verhältnis der verwendeten Basiskomponenten zwischen 0,85 und 1,2, vorzugsweise 0,95 und 1.1 liegt.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans.

Die im wesentlichen linearen Polyetherole besitzen vorzugsweise Molekulargewichte von 800 bis 5000, vorzugsweise 1000 bis 4000. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 6 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischung untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiol-butandiol-1,4-polyadipate, 1,6-Hexandiol-neopentyl-glykol-polyadipate, 1,6-Hexandiol-1,4-butandiol-polyadipate und Polycaprolactone.

Die Polyesterole besitzen Molekulargewichte von 800 bis 5000, vorzugsweise von 1000 bis 4000.

Als organische Diisocyanate b) kommen beispielsweise aliphatische, cycloaliphatische und vorzugsweise aromatische Diisocyanate in Betracht. Im einzelnen seien beispielhaft genannt: aliphatische Diisocyanate, wie Hexamethylendiisocyanat, cycloaliphatische Diisocyanate, wie Isophorondiisocyanat, 1,4-Cyclohexandiisocyanat, 1-Methyl-2,4- und -2,6-cyclohexandiisocyanat sowie die entsprechenden Isomerengemische, 4,4'-, 2,4'- und 2,2'-Dicyclohexylmethandiisocyanat sowie die entsprechenden Isomerengemische und vorzugsweise aromatische Diisocyanate, wie 2,4-Toluylendiisocyanat, Gemische aus 2,4- und 2,6-Toluylendiisocyanat, 4,4'-, 2,4'- und 2,2'-Diphenylmethandiisocyanat, Gemische aus 2,4'- und 4,4'-Diphenylmethandiisocyanat, urethanmodifizierte flüssige 4,4'- und/oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, Isophorondiisocyanat, Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat.

Als Kettenverlängerungsmittel c) mit den Molekulargewichten von 60 bis 300 kommen vorzugsweise aliphatische Diole mit 2 bis 14 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di(β-hydroxyethyl)-hydrochinon, (cyclo)aliphatische Diamine, wie z.B. Isophoron-diamin, Ethylendiamin, 1,2-, 1,3-Propylen-diamin, N-Methyl-propylendiamin-1,3, N,N'-Dimethyl-ethylen-diamin und aromatische Diamine, wie z.B. 2,4- und 2,6-Toluylendiamin, 3,5-Diethyl-2,4-und/oder -2,6-toluylen-diamin und primäre ortho-di-, tri- und/oder tetraalkylsubstituierte 4,4'-Diaminodiphenylmethane.

Zur Einstellung von Härte und Schmelzpunkt der TPU können die Aufbaukomponenten a) bis c) in relativ breiten molaren Verhältnissen variiert werden. Bewährt haben sich molare Verhältnisse von Polyhydroxylverbindungen a) zu Kettenverlängerungsmitteln c) von 1:1 bis 1:12, wobei die Härte und der Schmelzpunkt der TPU mit zunehmendem Gehalt an Diolen ansteigt. Hierdurch ergeben sich Produkte im Bereich von 70 Shore A bis 75 Shore D.

Zur Herstellung der TPU können die Aufbaukomponenten a) bis c), gegebenenfalls in Gegenwart von Katalysatoren, Hilfsmitteln und/oder Zusatzstoffen d) in solchen Mengen zur Reaktion gebracht werden, daß das Äquivalenzverhältnis von NCO-Gruppen der Diisocyanate zur Summe der NCO-reaktiven Gruppen, insbesondere der OH-Gruppen der Komponenten a) und c) 1:0,85 bis 1:1,20, vorzugsweise 1:0,95 bis 1:1,10 beträgt.

Geeignete Katalysatoren, welche insbesondere die Reaktion zwischen den NCO-Gruppen der Diisocyanate b) und den Hydroxylgruppen der Aufbaukomponenten a) und c) beschleunigen, sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche sowie insbesondere organische Metallverbindungen wie Titan-säurester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0005 bis 0,1 Teilen pro 100 Teilen Polyhydroxyverbindung eingesetzt.

Neben Katalysatoren können den Aufbaukomponenten auch Hilfsmittel und/oder Zusatzstoffe d) einverleibt werden. Genannt seien beispielsweise Gleitmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel.

Nähere Angaben über die obengenannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-A 29 01 774 zu entnehmen.

Die erfindungsgemäß einzusetzenden Phosphorverbindungen werden direkt nach der Herstellung der hydroxylterminierten Polyole und/oder kurz vor bzw. während der TPU-Reaktion zugesetzt. Besonders vorteilhaft ist die Zugabe direkt bei der Bereitstellung des hydroxylterminierten Polyols im TPU-Herstellbetrieb (Lagertank). Die Zugabe kann bei Temperaturen bis zu 150°C erfolgen.

Die erfindungsgemäßen Verbindungen komplexieren die TPU-aktiven Restkatalysatoren aus der Polyolherstellung. Damit werden die mit unterschiedlicher Reaktivität angelieferten Polyolchargen auf ein gleichmäßig niedriges Niveau gebracht. Es entfällt somit das oft angewandte Zwischenlagern des Polyols zur Erreichung einer für die TPU-Reaktion erwünschten niedrigen "Aktivität". Im folgenden kann dann die TPU-Reaktion, gegebenenfalls unter Zugabe einer jetzt definierten Menge Katalysators, kontrolliert durchgeführt werden. Eventuell vorhandene Spuren von Metallverbindungen aus der Herstellanlage werden ebenfalls maskiert.

Zur Herstellung von TPU's eignen sich die bekannten Mischaggregate, vorzugsweise die, die mit hoher Scherenergie arbeiten. Für die kontinuierliche Herstellung seien beispielhaft genannt Cokneter, vorzugsweise Extruder, wie z.B. Zweiwellenextruder und Busskneter, sowie das Mischkopf/Band-Verfahren.

Mit dem erfindungsgemäßen Verfahren werden thermoplastisch verarbeitbare Polyurethane erhalten, die als Spritzgußartikel, Extrudate und Beschichtungsmassen verwendet werden können.

### Beispiele

### 1-5) Desaktivierung des Polyols

300 Gew.-Teile eines Polybutylenadipates (Molgewicht ca. 2200) wurden bei 90°C mit 100 ppm des jeweiligen Desaktivators 4 h bzw. 23 h gerührt. Nach der Erwärmung auf 140°C setzte man den Polyester in einem Topf unter intensivem Rühren mit 120 Gew.-Teilen 4,4'-Diphenylmethandiisocyanat (60°C) um.

In den in den Tabellen angegebenen Zeitabständen wurden Proben der Reaktionsmischung entnommen und in einer Dibutylaminlösung abgestoppt. Die Rücktitration mit HCl ergab den noch nicht umgesetzten NCO-Restgehalt, aus dem der Umsatz errechnet wurde.

In den Tabellen sind die Umsatzwerte einiger möglicher Desaktivatoren einschließlich der erfindungsgemäßen Beispiele im Vergleich zu den jeweiligen Versuchen ohne Desaktivator angegeben.

### 1) Desaktivator Triphenylphosphit

| Zeit (sec) | ohne | Umsatz (%) mit Desaktivator | |
|---|---|---|---|
| | | nach 4 h | nach 23 h |
| 10 | 37 | 45 | 59 |
| 20 | 71 | 65 | 58 |
| 30 | 77 | 76 | 80 |
| 60 | 93 | 94 | 90 |

### 2) Desaktivator Acetylaceton

| Zeit (sec) | ohne | Umsatz (%) mit Desaktivator | |
|---|---|---|---|
| | | nach 4 h | nach 23 h |
| 10 | 65 | - | 55 |
| 20 | 70 | - | 55 |
| 30 | 79 | - | 76 |
| 60 | 91 | - | 95 |

### 3) Desaktivator H₂O₂

| Zeit (sec) | ohne | Umsatz (%) mit Desaktivator | |
|---|---|---|---|
| | | nach 4 h | nach 23 h |
| 10 | 72 | 59 | 57 |
| 20 | 85 | 63 | 62 |
| 30 | 86 | 73 | 72 |
| 60 | 89 | 82 | 85 |

### 4) Erfindungsgemäßes Beispiel:

Desaktivator Halbester der phosphorigen Säure mit der Formel

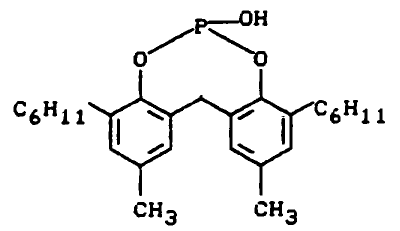

| Zeit (sec) | ohne | Umsatz (%) mit Desaktivator | |
|---|---|---|---|
| | | nach 4 h | nach 23 h |
| 10 | 49 | 30 | 39 |
| 20 | 75 | 45 | 46 |
| 30 | 80 | 49 | 55 |
| 60 | 94 | 73 | 68 |

### 5) Erfindungsgemäßes Beispiel:

Desaktivator Halbester der phosphorigen Säure mit der Formel

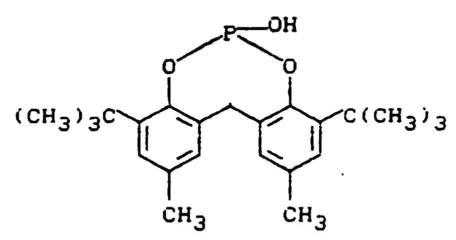

| Zeit (sec) | ohne | Umsatz (%) mit Desaktivator | |
|---|---|---|---|
| | | nach 4 h | nach 23 h |
| 10 | 37 | 38 | 35 |
| 20 | 72 | 62 | 50 |
| 30 | 73 | 67 | 46 |
| 60 | 95 | 80 | 70 |

### 6. Herstellung eines thermoplastisch verarbeitbaren Polyurethans

In einem 1 l Reaktionsgefäß werden 100 Gew.-Teile eines mit 100 ppm des Halbesters der phosphorigen Säure (Beispiel 4/16 h) desaktivierten Polybutylenadipates (Molgewicht ca. 2200) bei 140°C vorgelegt. Man gibt unter Rühren 40 Gew.-Teile 60°C heißes 4,4'-Diisocyanat-diphenylmethan (MDI) hinzu. Nach 1 Minute werden 10 Gew.-Teile 60°C heißes Butandiol-1,4 zugegeben. Nach weiteren 30 Sekunden gießt man die Reaktionsmischung auf ein beschichtetes Blech und tempert 30 Minuten bei 120°C nach.

## Patentansprüche

1. Verfahren zur Herstellung von thermoplastischen Polyurethan-Elastomeren (TPU) durch Umsetzung von
a) wenigstens einem im wesentlichen linearen hydroxylterminierten Polyol
b) wenigstens einem Isocyanat der allgemeinen Formel OCN-Z-NCO, wobei Z ein zweiwertiges organisches Radikal ist, und
c) gegebenenfalls wenigstens einem Diol-Kettenverlängerer, vorzugsweise einem aliphatischen Diol mit 2 bis 14 C-Atomen,
wobei das NCO/OH-Verhältnis der verwendeten Basiskomponenten zwischen 0,85 und 1,2 liegt, dadurch gekennzeichnet, daß man den Rohstoffen vor oder während der TPU-Herstellung 0,000001 bis 0,3 Gew.-%, bezogen auf die Rohstoffe, ein oder mehrere Verbindungen des Phosphors der allgemeinen Formeln II bis (IV), in denen
X Wasserstoff, einen gegebenenfalls substituierten aliphatischen, cycloaliphatischen oder aromatischen Rest mit 1 bis 18 C-Atomen oder einen Alkaryl oder Aralkylrest mit 7 bis 24 C-Atomen, der auch olefinische Doppelbindungen und Heteroatome enthalten kann,
n eine ganze Zahl von 1 bis 4, entsprechend der Bindigkeit von X, bedeuten, 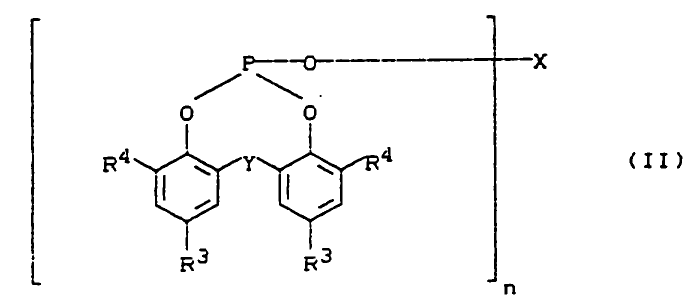
in der
X und n die oben angegebene Bedeutung haben,
R³ und R⁴ gleiche oder verschiedene C₁₋₉ aliphatische C₅₋₆ cycloaliphatische und C₇_₉-Aralkyl oder C₆₋₁₀-Arylreste bedeuten,
Y für eine einfache Bindung, S oder HCR⁵ steht, wobei R⁵ = H, C₁₋₆-Alkyl-, Cyclohexenyl- oder Cyclohexyl, 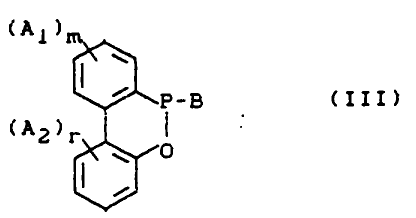 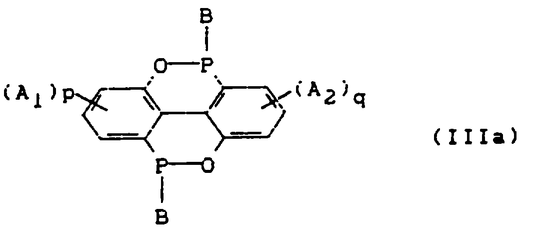 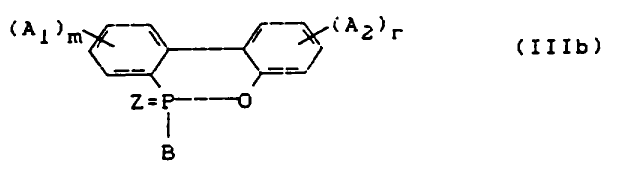 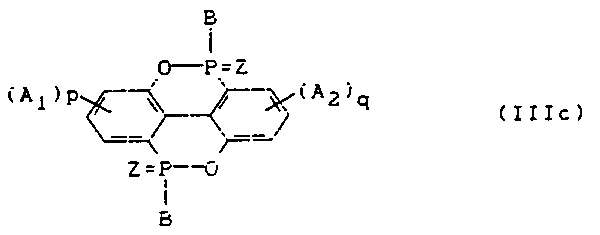 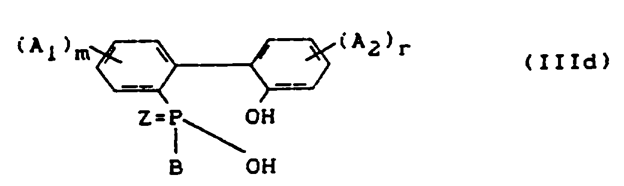 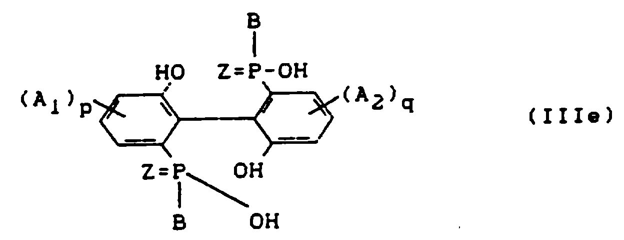
worin B Wasserstoff, Hydroxyl, Halogen, C₁-C₂₂-Alkyl, C₁-C₂₂-Alkoxy, C₁-C₂₂-Alkylthio, Aryloxy oder Arylthio, A₁ und A₂, die gleich oder verschieden sein können, Wasserstoff, Halogen, C₁-C₁₈-Alkyl, C₁-C₁₈-Alkyloxy, Aryl, Aryloxy, Acyl, Cyan, wobei die Reste A₁ und A₂ zusammen mit dem Biphenylring auch einen Phenanthrenring bilden können, Z Sauerstoff oder Schwefel, m und r ganze Zahlen von 0 bis 4 und p und q ganze Zahlen von 0 bis 3 bedeuten, 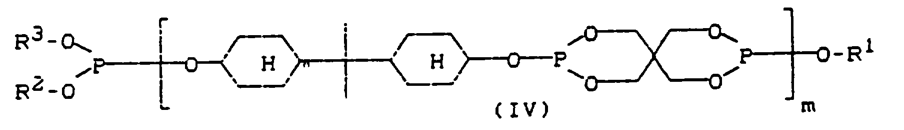 worin R¹, R und R³ gleich oder verschieden sein können und C₁-C₁₈-Alkyl, Aryl, einen Rest der Struktur V, 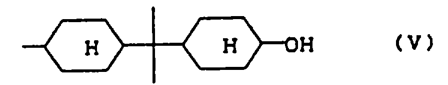 R¹ außerdem einen Rest der Struktur VI, 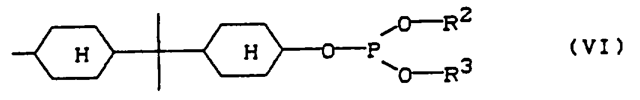 R und R³ außerdem zusammen einen Rest der Struktur VII darstellen und m 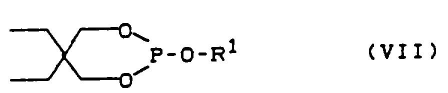 eine ganze Zahl von 1-20 bedeuten, zusetzt.

2. Verfahren gemäß Anspruch 1, dadurch gekennzeichnet, daß man den Rohstoffen 0,00001 bis 0,2 Gew.-%, bezogen auf die Rohstoffe, ein oder mehrere Verbindungen des Phosphors zusetzt.

3. Verfahren gemäß Anspruch 1 oder 2, dadurch gekennzeichnet, daß die Verbindungen des Phosphors die Formel (II) besitzen.

4. Verfahren gemäß Anspruch 3, dadurch gekennzeichnet, daß
X Wasserstoff,
R³ einen C₁₋₉-Alkylrest, einen C₅₋₆-Cycloalkylrest, einen C₇₋₉-Aralkylrest oder einen C₆₋₁₀ Arylrest bedeutet,
R⁴ einen Benzyl-, α-Methylbenzyl-, α,α'-Dimethylbenzyl-, Methyl-, Ethyl-, Isopropyl-, tert. Butyl-, tert.-Amyl-, Isononyl-, Cyclopentyl-oder Cyclohexylrest darstellt und
Y für S, CH₂, CH₃-CH, -CH₃CH₂CH, CH₃CH₂CH₂-CH, (CH₃)₂CH-CH, 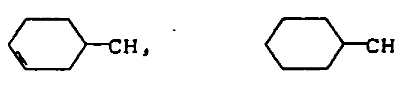
steht.

5. Verfahren gemäß einem der Ansprüche 1 bis 3, dadurch gekennzeichnet, daß das Polyol ein Polyester, Polyether, Polycarbonat oder ein Gemisch aus diesen mit einem mittleren Molekulargewicht von 800 bis 5000 ist.

6. Verfahren gemäß einem der Ansprüche 1 bis 3, dadurch gekennzeichnet, daß der Kettenverlängerer c) Ethylenglykol, Butandiol, Hexandiol, 1,4-Di-(β-hydroxyethyl)-hydrochinon ist.

## Claims

1. A process for the production of thermoplastic polyurethane elastomers (TPUS) by reaction of
a) at least one substantially linear hydroxyl-terminated polyol,
b) at least one isocyanate corresponding to the general formula OCN-Z-NCO, where Z is a difunctional organic radical, and
c) optionally at least one diol chain extender, preferably an aliphatic C₂₋₁₄ diol,
the NCO:OH ratio of the basic components used being between 0.85 and 1.2:1, characterized in that 0.000001 to 0.3% by weight, based on the raw materials, of one or more compounds of phosphorus corresponding to general formulae (II) to (IV), in which
X is hydrogen, an optionally substituted aliphatic, cycloaliphatic or aromatic C₁₋₁₈ radical or a C₇₋₂₄ alkaryl or aralkyl radical which may also contain olefinic double bonds and heteroatoms,
n is an integer of 1 to 4 according to the covalence of X, 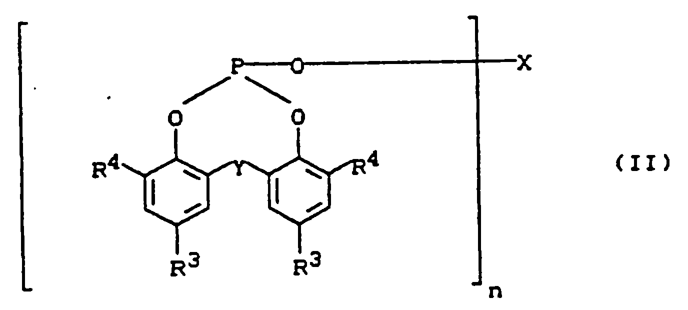
in which
X and n are as defined above,
R³ and R⁴ may be the same or different and represent C₁₋₉ aliphatic, C₅₋₆ cycloaliphatic and C₇₋₉ aralkyl or C₆₋₁₀ aryl radicals,
Y is a single bond, S or HCR⁵ where R⁵ = H, C₁₋₆ alkyl, cyclohexenyl or cyclohexyl, 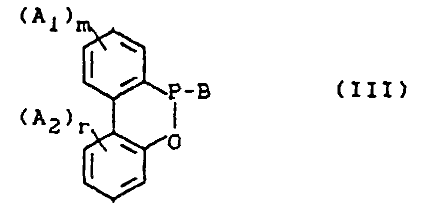 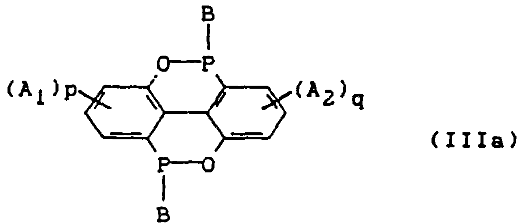 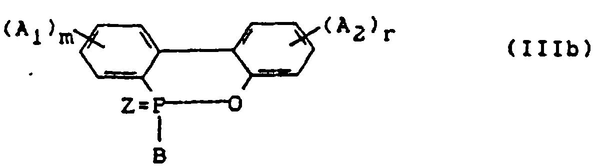 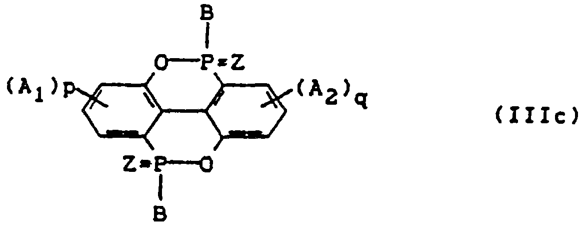 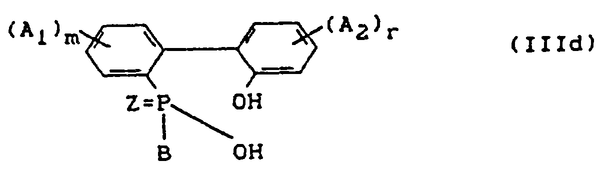 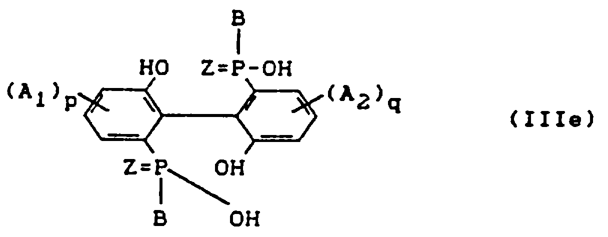
in which B is hydrogen, hydroxyl, halogen, C₁₋₂₂ alkyl, C₁₋₂₂ alkoxy, C₁₋₂₂ alkylthio, aryloxy or arylthio, A₁ and A₂ may be the same or different and represent hydrogen, halogen, C₁₋₁₈ alkyl, C₁₋₁₈ alkyloxy, aryl, aryloxy, acyl, cyano, in addition to which A₁ and A₂ together with the biphenyl ring may also form a phenanthrene ring, Z is oxygen or sulfur, m and r are integers of 0 to 4 and p and q are integers of 0 to 3, 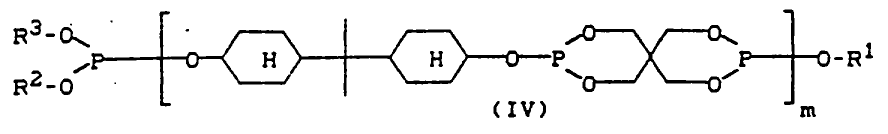 in which R¹, R and R³ may be the same or different and represent C₁₋₁₈ alkyl, aryl or having the following structure: 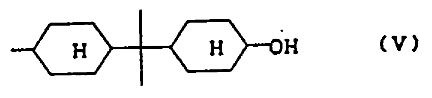 in addition to which R¹ may represent a group having the structure (VI): 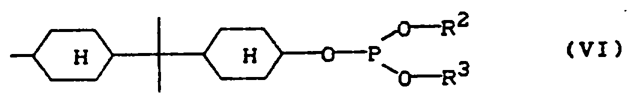 and R and R³ together may represent a group having the structure (VII): 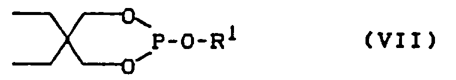
and m is an integer of 1 to 20, is added to the raw materials before or during production of the TPUS.

2. A process as claimed in claim 1, characterized in that 0.00001 to 0.2% by weight, based on the raw materials, of one or more compounds of phosphorus is added to the raw materials.

3. A process as claimed in claim 1 or 2, characterized in that the compounds of phosphorus correspond to formula (II).

4. A process as claimed in claim 3, characterized in that
X is hydrogen,
R³ is a C₁₋₉ alkyl radical, a C₅₋₆ cycloalkyl radical, a C₇₋₉ aralkyl radical or a C₆₋₁₀ aryl radical,
R⁴ is a benzyl, α-methyl benzyl, α,α'-dimethyl benzyl, methyl, ethyl, isopropyl, tert. butyl, tert. amyl, isononyl, cyclopentyl or cyclohexyl radical and
Y represents S, CH₂, CH₃-CH, CH₃CH₂CH, CH₃CH₂CH₂-CH (CH₃)₂CH-CH,

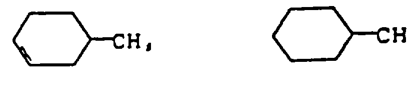

5. A process as claimed in any of claims 1 to 3, characterized in that the polyol is a polyester, polyether, polycarbonate or a mixture thereof having an average molecular weight of 800 to 5,000.

6. A process as claimed in any of claims 1 to 3, characterized in that the chain extender c) is ethylene glycol, butanediol, hexanediol, 1,4-di-(β-hydroxyethyl)-hydroquinone.

## Revendications

1. Procédé de préparation d'élastomères thermoplastiques de polyuréthanes (TPU) en faisant réagir
a) au moins un polyol essentiellement linéaire terminé par des radicaux hydroxyle,
b) au moins un isocyanate de formule générale OCN-Z-NCO, dans laquelle Z est un radical organique bivalent , et
c) éventuellement au moins un prolongateur de chaîne qui est un diol et, de préférence, un diol aliphatique ayant de 2 à 14 atomes de carbone,
procédé dans lequel le rapport NCO-OH des constituants de base utilisés est compris entre 0,85 et 1,2, caractérisé en ce que l'on ajoute aux matières premières, avant ou pendant la préparation des TPU, de 0,000001 à 0,3 % en poids, rapportés aux matières premières d'un ou de plusieurs composés du phosphore de formules générales (II) à (IV)
dans lesquelles
X représente un atome d'hydrogène à radical aliphatique, cycloaliphatique ou aromatique, éventuellement substitué ayant de 1 à 18 atomes de carbone, ou un radical alkaryle ou un aralkyle ayant de 7 à 24 atomes de carbone, qui peut contenir aussi des doubles liaisons oléfiniques et des hétéroatomes
n représente un nombre entier compris entre 1 et 4, en fonction de la valence de X, 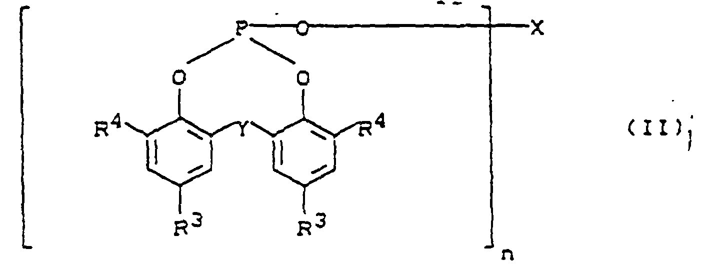
dans laquelle
X et n ont les significations précitées,
R³ et R⁴ représentent des radicaux aliphatiques en C₁₋₉, cycloaliphatiques en C₅₋₆ et aralkyliques en C₇₋₉ ou aryliques en C₆₋₁₀ identiques ou différents,C₆₋₁₀
Y représente une liaison simple S,ou HCR⁵, où R⁵ = H, un alkyle en C₁₋₆, un cyclohexényle ou un cyclohexyle. 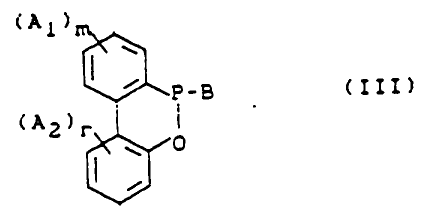 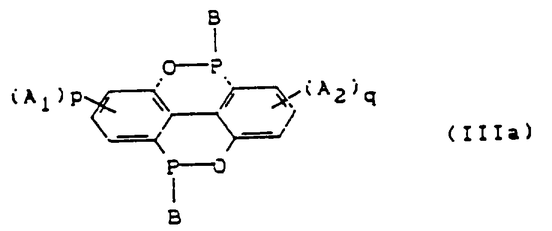 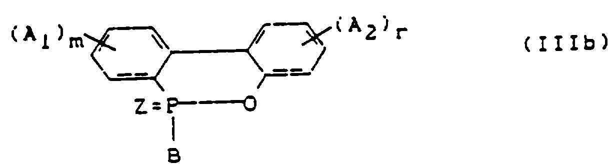 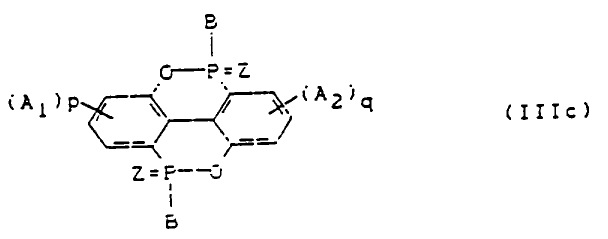 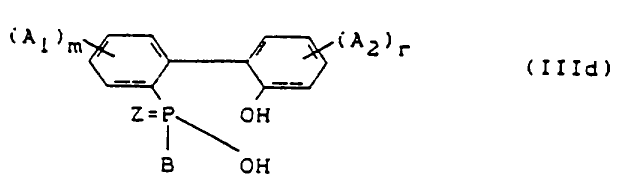 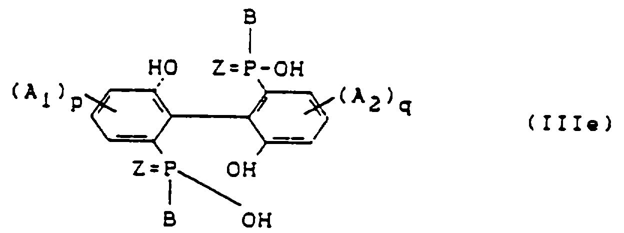 dans lesquelles B représente un atome d'hydrogène, un radical hydroxyle, un atome d'halogène, un alkyle en C₁₋₂₂, un alcoxy en C₁₋₂₂, un alkylthio en C₁₋₂₂, un aryloxy ou un arylthio, A₁ et A₂, qui peuvent être identiques ou différents, représentent un atome d'hydrogène ou d'halogène, un alkyle en C₁₋₁₈, un alkyloxy en C₁₋₁₈, un aryle, un aryloxy, un acyle, un cyano, où les radicaux A₁ et A₂ peuvent former aussi, avec le cycle biphénylique, un cycle de phénanthrène, Z représente de l'oxygène ou du soufre, m et r des nombres entiers compris entre 0 et 4 et p et q des nombres entiers compris entre 0 et 3. 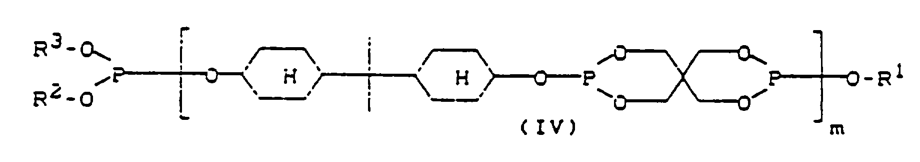 dans laquelle R¹, R et R³ peuvent être identiques ou différents et être un alkyle en C₁ - C₁₈, un aryle, un radical de structure V, 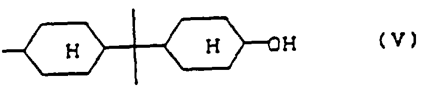 R¹ peut également être un radical de structure VI, 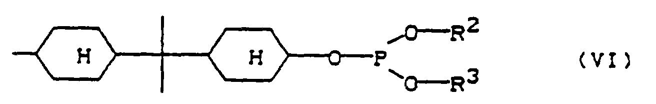 R et R³ peuvent également représenter ensemble un radical de structure VII et m 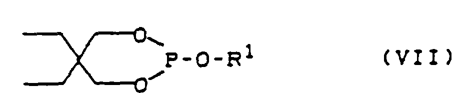 représente un nombre entier entre 1 et 20.

2. Procédé selon la revendication 1, caractérisé en ce que l'on ajoute aux matières premières de 0,00001 à 0,2% en poids, rapportés aux matières premières d'un ou de plusieurs composés du phosphore.

3. Procédé selon la revendication 1 ou 2, caractérisé en ce que les composés du phosphore présentent la formule (II).

4. Procédé selon la revendication 3, caractérisé en ce que
X représente un atome d'hydrogène
R³ représente un radical alkyle en C₁₋₉, un radical cycloalkyle en C₅₋₆, un radical aralkyle en C₇₋₉ ou un radical aryle en C₆₋₁₀,
R⁴ représente un radical benzyle, a-méthylbenzyle, α,α'-diméthylbenzyle, méthyle, éthyle, isopropyle, tert.-butyle, tert.-amyle, isononyle, cyclopentyle ou cyclohexyle, et
Y représente S, CH₂, CH₃-CH-CH₃CH₂CH, CH₃CH₂CH₂-CH, (CH₃)₂CH-CH,

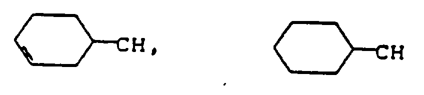

5. Procédé selon l'une des revendications 1 à 3, caractérisé en ce que le polyol est un polyester, un polyéther, un polycarbonate ou un mélange de ceux-ci ayant un poids moléculaire moyen entre 800 et 5000.

6. Procédé selon l'une des revendications 1 à 3, caractérisé en ce que le prolongateur de chaîne c) est de l'éthylèneglycol, du butanediol, de l'hexanediol, ou de la 1,4-di-(β-hydroxyéthyl)-hydroquinone.
